# EUROPÄISCHE PATENTSCHRIFT

(11) **EP 3 192 343 B1**
(45) Veröffentlichungstag und Bekanntmachung des Hinweises auf die Patenterteilung: **08.09.2021**
(21) Anmeldenummer: 16195447.4
(22) Anmeldetag: 25.10.2016
(51) Int. Cl.: A01B 63/111

(54) **ANBAUGERÄT MIT HÖHENVERSTELLBAREM TRAGRAHMEN**
IMPLEMENT WITH HEIGHT ADJUSTABLE SUPPORT FRAME
OUTIL AVEC CHASSIS RÉGLABLE EN HAUTEUR

(30) Priorität: 28.12.2015 DE 102015016999; 04.03.2016 DE 102016002670
(43) Veröffentlichungstag der Anmeldung: 19.07.2017
(73) Patentinhaber: PÖTTINGER Landtechnik GmbH, 4710 Grieskirchen (AT)
(72) Erfinder: Ackermann, Stephan, 4710 Grieskirchen (AT); Gadermayr, Andreas, 4751 Dorf a. d. Pram (AT); Reininger, Markus, 4752 Riedau (AT)
(74) Vertreter: Thoma, Michael

(56) Entgegenhaltungen:
- EP-A1- 1 300 061
- EP-A1- 2 158 799
- WO-A1-2012/167258
- US-A- 5 339 906
- US-A- 6 076 611
- US-A- 6 085 846
- US-A1- 2012 186 503
- US-A1- 2012 227 992
- US-A1- 2013 081 830

## Beschreibung

Die vorliegende Erfindung betrifft ein Anbaugerät zum Anbau an eine land- und/oder forstwirtschaftliche Maschine, insbesondere an einen Traktor oder Schlepper, wobei das Anbaugerät einen höhenverstellbaren Tragrahmen aufweist, an dem zumindest ein Arbeitsaggregat wie Mähwerk, Rechkreisel oder dergleichen zwischen einer Arbeitsstellung und einer Transportstellung verstellbar aufgehängt ist.

Es sind diverse landwirtschaftliche Anbaugeräte zum Anbau an einen Schlepper bekannt, deren Arbeitsaggregate wie beispielsweise eine Mähwerkseinheit, ein Rechkreisel, ein Konditionierer oder eine Bodenbearbeitungseinheit mit Grubberzinken, Scharscheiben oder Packerrädern an einem höhenverstellbaren Tragrahmen verstellbar aufgehängt sind, so dass das Arbeitsaggregat, das die land- und/oder forstwirtschaftliche Hauptfunktion des Geräts ausführt, zwischen einer abgesenkten Arbeitsstellung und einer ausgehobenen Transportstellung verbringbar ist. Beispielsweise können die Arbeitsaggregate mittels Tragarmen aufgehängt sein, die um liegende Schwenkachsen verschwenkt werden können, so dass die Arbeitsaggregate in einer grob gesprochen liegenden Arbeitsstellung über den Boden auskragen und in einer aufrechten Transportstellung nach oben ragen. Hierdurch können Maschinen mit großen Arbeitsbreiten realisiert werden, die dennoch die zulässige Straßentransportbreite einhalten, indem die Arbeitsaggregate für den Transport nach oben geschwenkt werden.

Hierbei kommt es jedoch aufgrund der immer größer werdenden Arbeitsbreiten dazu, dass bisweilen die maximal zulässige Transporthöhe nicht mehr eingehalten wird, da die Arbeitsaggregate um mehr als vier Meter nach oben ragen. Um hier gegenzusteuern bzw. die zulässige Transporthöhe einhalten zu können, wird deshalb üblicherweise der Tragrahmen so weit wie möglich abgesenkt, ggf. unter die für die Arbeitsstellung übliche bzw. optimale Arbeitshöhe. In der Arbeitsstellung soll der Tragrahmen in einem bestimmten Höhen-Sollbereich gefahren werden, um zum Zwecke der Bodenanpassung Auf- und Abbewegungen des Arbeitsaggregats zu ermöglichen, eine Gewichtsentlastung in einem günstigen Sollbereich zu fahren und/oder übermäßige Abknickwinkel von Gelenkwellen oder anderen Antriebsstrangelementen zu vermeiden. Wird der Tragrahmen in der Arbeitsstellung in einer zu stark abweichenden, "falschen" Tragrahmenhöhe gefahren, kann es dazu kommen, dass bei der Bodenanpassung Aufhängungselemente an Anschlägen anfahren und die nötige Bodenanpassung nicht mehr ausführen können, oder dass eine Gewichtsentlastungseinrichtung wie beispielsweise Zugfedern nicht mehr in einem die bestimmungsgemäße Entlastungskraft bereitstellenden Bereich gefahren werden, und/oder dass Gelenkwellen zu stark knicken, Energieversorgungsschläuche wie Hydraulikschläuche zu stark umgebogen werden, oder ähnliche Funktionsbeeinträchtigungen bzw. Verschleißpotential entstehen.

Im Stand der Technik ist es natürlich bekannt, die Arbeitshöhe der Arbeitsaggregate zu überwachen, indem die Höhenstellung der Arbeitsaggregate mit verschiedenen Sensoren erfasst wird und dann auf einem Anzeigegerät am Schlepper angezeigt wird, vgl. beispielsweise die Schriften EP 13 00 061 A1, EP 21 58 799 A1, US 2012/186503 A1, US 6076611 A, US 2012/227992 A1, US 6085846 A, WO 2012/167258 A1, US 2013/081830 A1 sowie US 5339906 A.

Hiervon ausgehend liegt der vorliegenden Erfindung die Aufgabe zugrunde, ein verbessertes Anbaugerät der genannten Art zu schaffen, das Nachteile des Standes der Technik vermeidet und Letzteren in vorteilhafter Weise weiterbildet. Insbesondere soll ein Betreiben des Anbaugeräts mit falschen Höhenstellungen des Tragrahmens vermieden werden.

Die genannte Aufgabe wird erfindungsgemäß durch ein Anbaugerät gemäß Anspruch 1 gelöst. Bevorzugte Ausgestaltungen der Erfindung sind Gegenstand der Unteransprüche.

Es wird also vorgeschlagen, die Höhenstellung des Tragrahmens zu erfassen und im Blickfeld des Maschinenführers anzuzeigen, insbesondere dergestalt, dass die erfasste Isthöhe vergleichend zu einem Sollbereich für die Tragrahmenhöhe angezeigt wird, so dass der Maschinenführer leicht erkennen kann, ob sich der Tragrahmen des Anbaugeräts im Bereich der Sollhöhe oder außerhalb befindet. Erfindungsgemäß sind zumindest ein Erfassungsmittel zum Erfassen der Höhenstellung des Tragrahmens sowie ein Anzeigeterminal zum Anzeigen der erfassten Höhenstellung des Tragrahmens vorgesehen, wobei das genannte Anzeigeterminal am Führerstand der land- und/oder forstwirtschaftlichen Maschine im Blickfeld des Maschinenführers positionierbar ist. Durch die vorgeschlagene Erfassung und Anzeige der Höhenstellung des Tragrahmens kann vermieden werden, dass der Maschinenführer beispielsweise nach dem Absenken der Arbeitsaggregate aus der Transportstellung in die Arbeitsstellung vergisst, die Tragrahmenhöhe zu korrigieren, wenn die Tragrahmenhöhe zuvor für den Straßentransport speziell abgesenkt wurde. Ähnliches gilt, wenn die Tragrahmenhöhe beispielsweise bei schwierigen Feldeinfahrten über Straßenböschungen oder Geländekuppen speziell angehoben wurde, um genug Bodenfreiheit zu haben und der Maschinenführer dann vergisst, den Tragrahmen wieder abzusenken.

Das genannte Anzeigeterminal kann hierbei ein fest am Schlepper angeordnetes Schlepperdisplay sein, welches dazu genutzt wird, die erfasste Höhenstellung des Tragrahmens des Anbaugeräts anzuzeigen. Das genannte Schlepperdisplay kann hierbei vom Anbaugerät her, beispielsweise einem daran vorgesehenen Jobrechner angesteuert werden. Alternativ oder zusätzlich kann die Ansteuerung des Schlepperdisplays auch von einer schlepperseitigen Anzeigesteuerung oder Steuervorrichtung erfolgen, der das Höhenstellungssignal der Erfassungsmittel zugeführt wird.

Alternativ oder zusätzlich zu einem solchen Anbaugeräte-unspezifischen Schlepperdisplay kann das Anzeigeterminal jedoch auch ein Anbaugerätespezifisches Gerätedisplay aufweisen, an dem die erfasste Höhenstellung des Tragrahmens angezeigt werden kann. Das genannte Gerätedisplay kann ebenfalls vom Anbaugerät her, beispielsweise dessen Jobrechner und/oder auch von einem schlepperseitigen Steuergerät angesteuert werden, wobei das genannte Gerätedisplay vorteilhafterweise ebenfalls im Führerstand des Schleppers positionierbar ist, beispielsweise durch eine dort vorgesehene Halterung.

Grundsätzlich kann das genannte Anzeigeterminal mobil ausgebildet sein und ein Mobildisplay beispielsweise in Form eines Tablets aufweisen. Alternativ ist jedoch auch ein fest installierbares Anzeigedisplay möglich. Das Display kann beispielsweise ein computerähnlicher Bildschirm sein.

Das genannte Anzeigeterminal kann hierbei mittels einer Signal- und/oder Stromversorgungsleitung an das geräte- und/oder schlepperseitige Steuergerät angebunden sein. Alternativ ist auch eine drahtlose Kommunikation zwischen den Erfassungsmitteln zum Erfassen der Höhenstellung des Tragrahmens bzw. dem entsprechenden Steuergerät einerseits und dem Anzeigeterminal andererseits möglich.

Gemäß der Erfindung besitzt das Anzeigeterminal eine Bereichsanzeige zum Anzeigen eines Sollbereichs der Tragrahmenhöhe und eine Istanzeige zum Anzeigen der erfassten Isthöhenstellung des Tragrahmens relativ zu dem genannten Sollbereich der Tragrahmenhöhe, um leicht erfassbar zu machen, ob die Isthöhe außerhalb oder innerhalb des Sollbereichs liegt. Beispielsweise kann die genannte Sollbereichsanzeige eine Balkendiagrammdarstellung umfassen, der eine Zeigerdarstellung der Istanzeige zugeordnet sein kann. Vorteilhafterweise kann beispielsweise ein grüner Balken den Sollbereich anzeigen, beispielsweise mit gelb und/oder rot angrenzenden Randbereichen, die außerhalb des optimalen Höhenbereichs liegende Höhenstellungen des Tragrahmens anzeigen, wobei die Istanzeige den vorgenannten Zeiger im Bereich des grünen Balkens und auch außerhalb bewegen kann. Es versteht sich jedoch auch, dass andere Ausbildungen der Anzeigeeinheiten möglich sind, beispielsweise Ampelanzeigen oder Ähnliches. Auch akustische Anzeigen sind möglich.

Gemäß der Erfindung umfasst das Anzeigeterminal dabei zumindest zwei Bereichsanzeigen, von denen eine erste Bereichsanzeige den Sollbereich der Tragarmenhöhe für die Arbeitsstellung des Arbeitsaggregats anzeigt und eine zweite Bereichsanzeige den Sollbereich der Tragrahmenhöhe für die Transportstellung des Arbeitsaggregats anzeigt.

Die Aufhängung bzw. Anlenkung oder Lagerung des zumindest einen Arbeitsaggregats an den Tragrahmen kann grundsätzlich verschieden ausgebildet und an die jeweilige Maschinengattung angepasst sein. Dementsprechend kann das zumindest eine Erfassungsmittel zum Erfassen der Höhenstellung verschieden ausgebildet sein und einen oder mehrere Sensoren umfassen, die selbst wiederum verschieden ausgebildet sein können.

Gemäß der Erfindung ist das zumindest eine Arbeitsaggregat mittels zumindest eines schwenkbaren Tragarms aufgehängt, der um eine zumindest näherungsweise liegende Tragarmschwenkachse zwischen einer abgesenkten Arbeitsstellung und einer angehobenen Transportstellung verschwenkt werden kann. Bei einer solchen Ausbildung des Anbaugeräts können die Erfassungsmittel zum Erfassen der Höhenstellung des Tragrahmens vorteilhafterweise zumindest einen Winkelsensor aufweisen, mittels dessen die Schwenkstellung des genannten Tragarms bestimmt werden kann. Je nach konkreter Ausbildung des Tragrahmens und/oder der Aufhängung des Arbeitsaggregats können auch zwei oder mehr Winkelsensoren sinnvoll sein. In Weiterbildung der Erfindung kann das Arbeitsaggregat beispielsweise an einem Lagerarm angelenkt sein, der wiederum an dem vorgenannten Tragarm schwenkbar angelenkt ist, beispielsweise um eine wiederum liegend ausgerichtete Schwenkachse, die sich zu der vorgenannten Tragarmschwenkachse näherungsweise parallel erstrecken kann. Bei einer solchen Ausbildung kann es sinnvoll sein, zwei Winkelsensoren vorzusehen, von denen einer die Winkelstellung des Tragarms gegenüber der Horizontalen und/oder Vertikalen und/oder gegenüber einem Basisteil des Tragrahmens erfasst und ein anderer Winkelsensor die Winkelstellung des Lagerarms gegenüber der Horizontalen oder Vertikalen und/oder gegenüber dem Tragarm bestimmt.

Alternativ oder zusätzlich zu einem solchen Winkelsensor kann das zumindest eine Erfassungsmittel auch einen Höhensensor umfassen, der beispielsweise direkt den Abstand eines höhenrelevanten Strukturteils des Tragrahmens vom Boden messen kann und/oder die Höhenstellung relativ zum Schlepper. Beispielsweise kann ein Sensor den Abstand eines zentralen Basisträgers vom Boden vorzugsweise berührungslos messen, wobei der genannte Basisträger das zumindest eine Arbeitsaggregat höhenverstellbar tragen kann und/oder selbst höhenverstellbar beispielsweise mittels einer Dreipunktanlenkung am Schlepper aufgehängt sein kann.

Alternativ oder zusätzlich kann das zumindest eine Erfassungsmittel zum Erfassen der Höhenstellung auch zumindest einen Sensor aufweisen, der einen Ausfahrzustand bzw. eine Stellung und/oder eine Wegstrecke eines Stellaktors, insbesondere eines Stellzylinders erfassen kann, wobei der genannte Sensor vorteilhafterweise ein Linearsensor sein und/oder in den genannten Stellaktor integriert sein kann. Beispielsweise kann ein solcher Sensor dem Hubzylinder zugeordnet sein, mittels dessen der das Arbeitsaggregat tragende Tragarm ausgehoben werden kann. Alternativ oder zusätzlich kann ein solcher Sensor auch einen Verstellzylinder der Dreipunktanlenkung des zentralen Basisträgers zugeordnet sein, um die Höhenstellung des Basisträgers relativ zum Schlepper bestimmen zu können.

Alternativ oder zusätzlich kann das zumindest eine Erfassungsmittel auch einen Wegmesszylinder umfassen, mittels dessen die jeweils zurückgelegte Wegstrecke eines höhenrelevanten Bauteils gemessen werden kann.

Das vorgenannte Anzeigeterminal kann vorteilhafterweise eine Schwenkstellungs-Sollbereichsanzeige aufweisen, die für die Schwenkstellung des Tragarms und/oder für die Schwenkstellung des Lagerarms einen Sollwinkelbereich anzeigt, wobei das Anzeigeterminal ferner eine Schwenkstellungs-Istanzeige umfassen kann, die die Ist-Schwenkstellung des Tragarms und/oder des Lagerarms relativ zu dem jeweils zugehörigen Sollbereich anzeigen kann.

Alternativ oder zusätzlich zu einer solchen direkten Anzeige der Schwenkstellungen kann auch eine Auswerteeinrichtung vorgesehen sein, mittels derer die erfasste Schwenkstellung des Tragarms und/oder des Lagerarms und/oder weiterer Aufhängungsarme ausgewertet wird, um hieraus die Höhenstellung des Tragrahmens zu bestimmen, so dass in der zuvor beschriebenen Weise die Höhenstellung des Tragrahmens angezeigt werden kann, insbesondere relativ zu einem Sollbereich hierfür.

In Weiterbildung der Erfindung ist eine Steuervorrichtung zum Ansteuern einer Höheneinstellvorrichtung vorgesehen, mittels derer die Höhenstellung des Tragrahmens des Anbaugeräts eingestellt werden kann.

Die genannte Steuervorrichtung kann hierbei einen manuellen Bedienmodus umfassen, der es dem Maschinenführer ermöglicht, die Höheneinstellung des Tragrahmens manuell vorzunehmen, wobei der Maschinenführer hier anhand des am Anzeigeterminal angezeigten Istwerts und/oder Sollwerts der Höhenstellung vorgehen kann.

Um die Höheneinstellung weiter zu erleichtern, kann die genannte Steuervorrichtung auch halbautomatisch oder vollautomatisch arbeitend ausgebildet sein, insbesondere dergestalt, dass halbautomatisch oder vollautomatisch eine Höhenstellung angefahren wird, die innerhalb des Sollbereichs der Höheneinstellung liegt. Zeigt beispielsweise das Anzeigeterminal an, dass die Isthöhenstellung außerhalb des Sollbereichs hierfür liegt, kann die Steuervorrichtung ggf. nach Freigabe durch den Maschinenführer bzw. nach Eingabe eines entsprechenden Startbefehls durch den Maschinenführer die Verstellung des Tragrahmens veranlassen, beispielsweise einen entsprechenden Aktor ansteuern, um die Sollhöhenstellung zu erreichen. Bei vollautomatischer Ausbildung der Steuervorrichtung kann die Sollhöhenstellung auch automatisch angefahren werden, beispielsweise immer dann, wenn das Arbeitsaggregat aus der Transportstellung in die Arbeitsstellung abgesenkt oder umgekehrt aus der Arbeitsstellung in die Transportstellung ausgehoben wird.

Arbeitet die Erfassungseinrichtung zum Erfassen der Isthöhenstellung des Tragrahmens in der vorgenannten Weise mit zumindest einem Winkelsensor, kann die genannte Steuervorrichtung auch nach Art einer Regeleinrichtung ausgebildet sein und die Höhenstellung eines Tragrahmenteils, an dem der vorgenannte Tragarm angelenkt ist, derart verstellen, bis der ermittelte Schwenkstellungswinkel des Tragarms in einem hierfür vorgesehenen Sollbereich ist und/oder der Schwenkstellungswinkel des vorgenannten Lagerarms in einem hierfür vorgesehenen Sollbereich zu liegen kommt, wenn das Arbeitsgerät sich in seiner Arbeitsstellung befindet bzw. im Arbeitsbetrieb betrieben wird.

Alternativ oder zusätzlich kann die genannte Steuerungsvorrichtung auch einen Steuerungs- und/oder Regelbaustein umfassen, der die Höhenstellung des Tragrahmens beim Verbringen des Arbeitsaggregats in die Transportstellung so weit absenkt, bis die zulässige Transporthöhe von - derzeit beispielsweise 4 m - erreicht oder unterschritten ist bzw. eingehalten wird.

Die Messsensoren können dabei grundsätzlich verschieden ausgebildet und angeordnet sein, beispielsweise an dem Ausleger bzw. dem Anbaugerät oder einer Wippe des Anbaugeräts vorgesehene Winkelmesssensoren sein. Die Sensoren können mit einer Steuerung bzw. mit einem Rechner verbunden sein, in der beispielsweise die Länge und/oder Breite des Anbaugeräts und/oder des jeweiligen auskragenden Arbeitsaggregats hinterlegt ist. Aus dem gemessenen Anstellwinkel des Anbaugeräts und/oder Arbeitsaggregats und seiner bekannten Länge und/oder Breite kann somit ohne zusätzlichen Aufwand an Bauteilen die vertikale Erstreckung bzw. die Höhe des Anbaugeräts ermittelt werden. Hierzu muss lediglich die Steuerung entsprechend eingestellt werden und es werden keine zusätzlichen Bauteile benötigt.

In einer bevorzugten Ausführung ist denkbar, dass das Anbaugerät ein Pflug, ein Grubber, ein Mähwerk, eine Egge, eine Saatbeetkombination, eine Sämaschine, ein Heuwender, ein Häcksler und/oder ein sonstiges land- und/oder forstwirtschaftliches Anbaugerät ist. Insbesondere bezieht sich die Erfindung somit allgemein auf Anbaugeräte, die in ihren Arbeitsstellungen eine verhältnismäßig große Breite bezogen auf die entsprechende Maschine aufweisen und die in ihrem vertikal nach oben verschwenkten Transportzustand entsprechend große Höhen einnehmen können.

In einer weiteren bevorzugten Ausführung ist denkbar, dass das Anbaugerät in der Arbeitsstellung im Wesentlichen horizontal und/oder in der Transportstellung im Wesentlichen vertikal angeordnet ist. Damit kann das Anbaugerät zwischen den beiden Positionen um ca. 90° verschwenkt werden, wobei der exakte Winkel hierbei nebensächlich ist. So kann das Anbaugerät auch um 60° bis 120° zwischen den beiden Positionen oder um einen davon abweichenden Winkel verschwenkt werden, ohne von dem Erfindungsgedanken abzuweichen.

Die Erfindung richtet sich auch auf die Kombination einer land- und/oder forstwirtschaftlichen Maschine, insbesondere einen Traktor mit wenigstens einem Anbaugerät der vorstehend beschriebenen Art.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Draufsicht auf ein Anbaugerät in Form einer Mähmaschine, die an einen Schlepper angebaut ist und zwei seitlich auskragende, in Arbeitsstellung befindliche Arbeitsaggregate zeigt,
- Fig. 2:: eine schematische Darstellung der Lagerung der Arbeitsaggregate am Tragrahmen des Anbaugeräts aus Fig. 1,
- Fig. 3:: eine schematische Darstellung der Anzeige der Tragrahmenhöhe, und

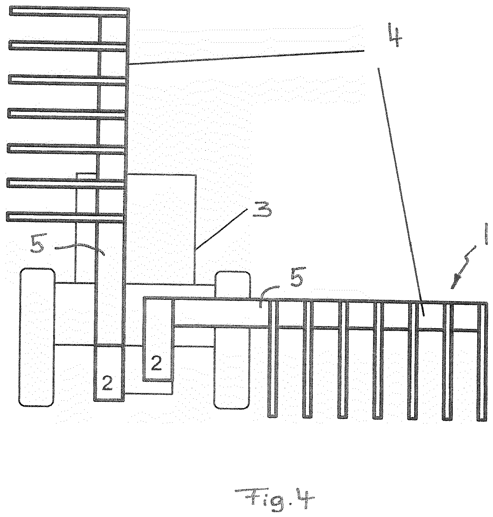

- Fig. 4:: eine schematische Heckansicht des Anbaugeräts, wobei ein Arbeitsaggregat in abgesenkter Arbeitsstellung und ein Arbeitsaggregat in angehobener Transportstellung gezeigt ist.

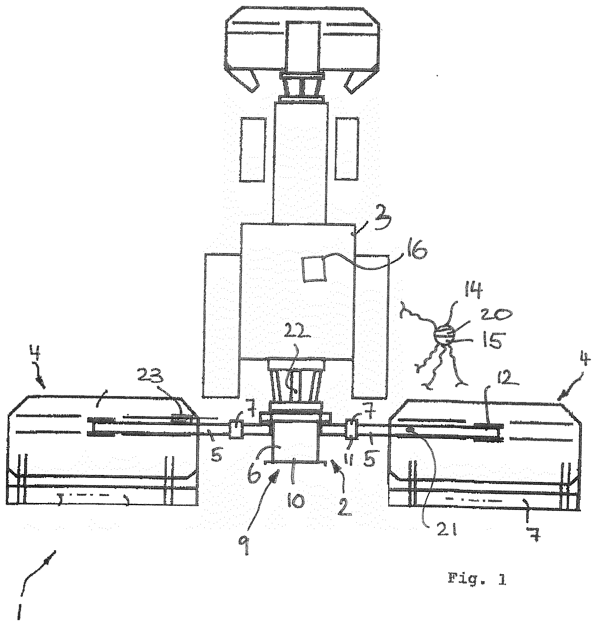

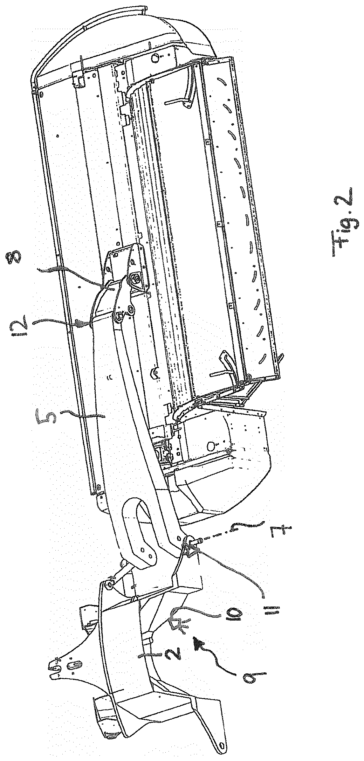

Wie Fig. 1 und 2 zeigen, kann das Anbaugerät 1 einen Tragrahmen 2 aufweisen, der an einen Schlepper 3 angebaut werden kann. Je nach Ausbildung des Anbaugeräts 1 kann der Tragrahmen 2 mittels eines Anbaubocks und einer Dreipunktanlenkung am Schlepper 3 angebaut und über die genannte Dreipunktanlenkung höhenverstellbar sein. Alternativ kann der Tragrahmen 2 bei Ausbildung des Anbaugeräts 1 als Aufsattelgerät auch mittels eines Fahrwerks am Boden abgestützt und über eine Deichsel am Schlepper 3 angelenkt sein, wobei der Tragrahmen 2 beispielsweise durch eine höhenverstellbare Ausbildung des Fahrwerks und/oder eine Knickdeichsel und/oder andere Höhenverstellmittel höhenverstellbar sein kann.

Es sind auch Mischformen möglich, bei denen der Tragrahmen 2 mittels eines Tastfahrwerks in Arbeitsstellung am Boden abgestützt ist und für den Transport ausgehoben werden kann.

Wie Fig. 2 näher zeigt, können an dem Tragrahmen 2 mehrere Arbeitsaggregate 4 angelenkt bzw. aufgehängt sein, die im Falle der gezeigten Mähmaschine als Mähwerkseinheiten ausgebildet sein können. Die Arbeitsaggregate 4 können hierbei vorteilhafterweise mittels Tragarmen 5 an dem Basisträger 6 des Tragrahmens 2 angelenkt sein, wobei die genannten Tragarme 5 um liegende Tragarmschwenkachsen 7, die in Fahrtrichtung weisen können, schwenkbar gelagert sein können, so dass die Tragarme 5 aus der in Fig. 2 gezeigten abgesenkten Arbeitsstellung mit näherungsweise liegender Tragarmausrichtung in eine angehobene Transportstellung mit näherungsweise aufrechter Tragarmausrichtung verbracht werden können. Hierzu kann ein geeigneter Hubaktor beispielsweise in Form eines Druckmittelzylinders einerseits am Basisträger 6 und andererseits am jeweiligen Tragarm 5 angelenkt sein.

Die Arbeitsaggregate 4 können an den Tragarmen 5 direkt oder indirekt angelenkt sein, beispielsweise mittels der in Fig. 2 weiter gezeigten Lagerarme 8, die wiederum um liegende Schwenkachsen 8, die parallel zu den Tragarmschwenkachsen 7 ausgerichtet sein können, schwenkbar an den auskragenden Enden der Tragarme 5 aufgehängt sein können.

Das genannte Anbaugerät 1 umfasst ferner Erfassungsmittel 9 zum Erfassen der Höhenstellung des Tragrahmens 2, wobei Erfassungsmittel 9 zumindest einen Sensor oder verschiedene Sensoren umfassen kann. Der zumindest eine Sensor kann hierbei verschieden ausgebildet sein, wobei auch mehrere Sensoren vorgesehen sein können, die jeweils gleich ausgebildet oder auch verschiedenartig ausgebildet sein können. Beispielsweise kann dem zentralen Basisträger 6 ein Höhensensor 10 zugeordnet sein, der den Abstand des Basisträgers zum Boden misst. Alternativ oder zusätzlich kann die Höhe des zentralen Basisträgers 6 auch über die Höhenstellung der Dreipunktanlenkung des Schleppers 3 bestimmt werden.

Alternativ oder zusätzlich können den Tragarmen 5 Winkelsensoren 11 zugeordnet sein, die die Schwenkstellung der Tragarme 5 relativ zur Horizontalen und/oder Vertikalen und/oder relativ zum Basisträger 6 bestimmen können. Ferner können weitere Winkelsensoren 12 den Lagerarmen 13 bzw. dem Gelenk zwischen den Tragarmen 5 und den Lagerarmen 13 zugeordnet sein, um auch deren Winkelstellung relativ zur Horizontalen und/oder Vertikalen und/oder relativ zu den Tragarmen 5 bestimmen zu können.

Alternativ oder zusätzlich zu den genannten Winkelsensoren 11 kann das Erfassungsmittel 9 auch zumindest einen Linearsensor 21 zum Erfassen der Stellung bzw. zurückgelegten Wegstrecke des Hubzylinders aufweisen, mittels dessen der jeweilige Tragarm 5 ausgehoben werden kann, sodass aus der Stellung dieses Hubzylinders die Stellung des Tragarms 5 abgeleitet werden kann. Alternativ oder zusätzlich kann auch zumindest ein Sensor, vorzugsweise Linearsensor dem Hubzylinder der Dreipunktanlenkung zugeordnet sein, mittels derer der zentrale Basisträger 6 des Tragrahmens 2 am Schlepper 3 angelenkt ist, um aus der Stellung des Dreipunktzylinders die Höhenstellung des Basisträgers 6 berechnen zu können.

Alternativ oder zusätzlich kann das zumindest eine Erfassungsmittel 9 auch einen Wegmesszylinder 23 umfassen, mittels dessen die zurückgelegte Wegstrecke eines höhenrelevanten Strukturbauteils gemessen werden kann.

Wie in Fig. 1 schematisch angedeutet, ist das zumindest eine Erfassungsmittel 9, insbesondere dessen Sensoren wie die genannten diversen Höhen- und/oder Linear- und/oder Winkelsensoren 10 bis 12 mit einer Steuervorrichtung 14 verbunden, die eine Auswerteeinheit 15 umfasst, um aus den Sensorsignalen die Höhenstellung des Tragrahmens 2 zu bestimmen.

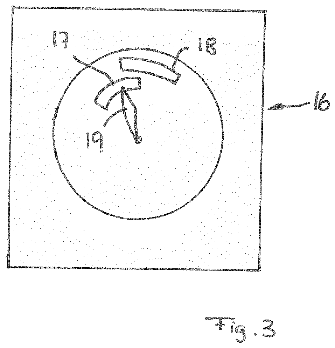

Die bestimmte Isthöhenstellung des Tragrahmens 2 wird auf einem Anzeigeterminal 16 angezeigt, das in Form eines am Führerstand des Schleppers 3 positionierbaren Displays ausgebildet sein kann und von der genannten Steuervorrichtung 14 her angesteuert sein kann. Das genannte Anzeigeterminal 16 kann hierbei in der eingangs beschriebenen Weise sowohl die Sollbereiche 17, 18 für die Höhenstellung des Tragrahmens 2 in der Arbeitskonfiguration und für die Transportkonfiguration des Anbaugeräts 1 anzeigen, und relativ zu dem zumindest einen Sollhöhenbereich den Istwert der Höhenstellung als Ist-Höhenanzeige 19 anzeigen, beispielsweise in der eingangs erläuterten Zeiger-Balkendiagrammanzeige, vgl. Fig. 3.

Die genannte Steuervorrichtung 14 kann vorteilhafterweise auch dazu genutzt werden, die Höhenstellaktoren zum Verstellen der Höhenstellung des Tragrahmens 2 anzusteuern, und zwar vorteilhafterweise in halbautomatischer oder vollautomatischer Weise, wobei die Steuervorrichtung 14 vorteilhafterweise verschiedene Betriebsmodi umfassen kann, um die Höhenstellung des Tragrahmens 2 vorteilhafterweise wahlweise manuell, halbautomatisch und vollautomatisch einstellen zu können, wie dies eingangs erläutert worden ist.

Zur Ermittlung der Höhe des Arbeitsgeräts 1 können Messdaten der Messsensoren bzw. der Winkelsensoren an den einzelnen Bauteilen von einer nicht gezeigten Steuerung erfasst werden. Ferner kann aus den ermittelten Daten sowie aus der bekannten Länge des Anbaugeräts 1 die vertikale Position bzw. vertikale Erstreckung des Anbaugeräts 1 ermittelt werden. Da auch die Position des Anbaubocks 2 über entsprechende Sensoren ermittelbar sein kann, und ferner die Position des Anbaubocks 2 relativ zum Untergrund der Maschine bekannt sein kann, kann somit die vertikale Erstreckung des Anbaugeräts 1 vom Boden bis zu seinem höchsten Punkt gemessen und angegeben werden.

Mittels der Steuerung ist es auch denkbar, das Anbaugerät 1 automatisch in die Transportstellung zu bringen bzw. zwischen Arbeits- und Transportstellung zu verschwenken. Hierzu kann eine Bedienperson den entsprechenden Verschwenkvorgang über beispielsweise das Bedienterminal starten. Zum Einnehmen der Transportstellung kann dann einerseits der jeweilige Tragarm 5 nach oben geschwenkt sowie der Anbaubock 2 nach unten verfahren werden, um die vertikale Ausdehnung des Anbaugeräts zu minimieren und die maximal zulässige Verfahrhöhe von beispielsweise 4 Metern einzuhalten.

## Patentansprüche

1. Anbaugerät zum Anbau an einen Schlepper (3), mit einem höhenverstellbaren Tragrahmen (2), an dem zumindest ein Arbeitsaggregat (4) wie Mähwerk, Rechkreisel, Bodenbearbeitungseinheit oder dergleichen mittels zumindest eines Tragarms (5), der um eine liegende Tragarmschwenkachse (7) verschwenkbar an dem höhenverstellbaren Tragrahmen (2) gelagert ist, zwischen einer abgesenkten Arbeitsstellung und einer angehobenen Transportstellung verstellbar aufgehängt ist, wobei zumindest ein Erfassungsmittel (9) zum Erfassen der Höhenstellung des Tragrahmens (2) sowie ein Anzeigeterminal (16) zum Anzeigen der erfassten Höhenstellung des Tragrahmens (2) vorgesehen ist, wobei das genannte Anzeigeterminal (16) am Führerstand des Schleppers (3) im Sichtfeld des Maschinenführers positionierbar ist, **dadurch gekennzeichnet, dass** das Anzeigeterminal (16) eine Bereichsanzeige (17, 18) zum Anzeigen eines Sollbereichs der Tragrahmenhöhe und eine Istanzeige (19) zum Anzeigen der erfassten IstHöhenstellung des Tragrahmens (2) relativ zu dem genannten Sollbereich aufweist, wobei das Anzeigeterminal (16) eine erste Bereichsanzeige (17) zum Anzeigen eines Sollbereichs der Tragrahmenhöhe für die Arbeitsstellung des Anbaugeräts (1), in der der Tragarm (5) nach unten verschwenkt ist, und eine zweite Bereichsanzeige (18) zum Anzeigen eines Sollbereichs der Tragrahmenhöhe für die Transportstellung des Anbaugeräts (1), in der der Tragarm (5) nach oben geschwenkt ist, aufweist.

2. Anbaugerät nach dem vorhergehenden Anspruch, wobei das Anzeigeterminal (16) ein fest am Schlepper (3) vorgesehenes Schlepperdisplay und/oder ein zu dem Anbaugerät (1) zugehöriges Gerätedisplay aufweist.

3. Anbaugerät nach einem der vorhergehenden Ansprüche, wobei das zumindest eine Erfassungsmittel (9) zumindest einen Sensor (10, 11, 21, 22) zum Erfassen einer Lage und/oder einer Ausrichtung und/oder einer zurückgelegten Wegstrecke und/oder eines zurückgelegten Schwenkwinkels eines höhenrelevanten Strukturbauteils des Anbaugeräts umfasst.

4. Anbaugerät nach einem der vorhergehenden Ansprüche, wobei wobei zumindest ein Winkelsensor (11) zum Erfassen der Schwenkstellung des Tragarms (7) vorgesehen ist, wobei das Anzeigeterminal (16) eine Schwenkstellungs-Sollbereichsanzeige zum Anzeigen eines Sollbereichs für die Schwenkstellung des Tragarms aufweist und/oder eine Auswerteeinrichtung zum Auswerten der erfassten Schwenkstellung und Bestimmen der Höhenstellung des Tragrahmens (2) aus der erfassten Schwenkstellung vorgesehen ist.

5. Anbaugerät nach einem der vorhergehenden Ansprüche, wobei das zumindest eine Erfassungsmittel (9) einen Höhensensor (10) zum Erfassen des Abstands eines zentralen Basisträgers (6) des Tragrahmens (2) vom Boden aufweist.

6. Anbaugerät nach einem der vorhergehenden Ansprüche, wobei das zumindest eine Erfassungsmittel (9) zumindest einen Sensor (21, 22) insbesondere Linearsensor, zum Erfassen der Stellung und/oder zurückgelegten Wegstrecke eines Stellzylinders aufweist, der zum Verstellen des Arbeitsaggregats (4) und/oder des Tragrahmens (2) vorgesehen ist.

7. Anbaugerät nach einem der vorhergehenden Ansprüche, wobei das zumindest eine Erfassungsmittel zumindest einen Wegmesszylinder (23) zum Erfassen des zurückgelegten Wegs und/oder der Stellung eines höhenrelevanten Strukturteils des Anbaugeräts aufweist.

8. Anbaugerät nach einem der vorhergehenden Ansprüche, wobei eine Steuervorrichtung (14) zum Ansteuern einer Höheneinstellvorrichtung zum Einstellen der Höhe des Tragrahmens (2) vorgesehen ist, wobei die Steuervorrichtung (14) einen Steuerbaustein (20) zum halb- oder vollautomatischen Einstellen der Tragrahmenhöhe in Abhängigkeit der erfassten Tragrahmenhöhe aufweist.

9. Anbaugerät nach dem vorhergehenden Anspruch in Verbindung mit Anspruch 5, wobei die Steuervorrichtung dazu ausgebildet ist, in Abhängigkeit der erfassten Schwenkstellung des Tragarms (5) die Höheneinstellvorrichtung derart zu verstellen, dass die erfasste Schwenkstellung des Tragarms (5) einen Sollbereich erreicht.

10. Anbaugerät nach einem der vorhergehenden Ansprüche, wobei die Steuervorrichtung (14) dazu ausgebildet ist, bei dem oder nach dem Verfahren des Arbeitsaggregats (4) in die Transportstellung die Tragrahmenhöhe (2) derart zu verstellen, dass eine maximal zulässige Transporthöhe eingehalten oder unterschritten ist.

11. Anbaugerät nach einem der vorhergehenden Ansprüche, wobei das Arbeitsaggregat (4) in seiner Arbeitsstellung eine im Wesentlichen liegende Ausrichtung und in seiner Transportstellung eine im Wesentlichen aufrechte Ausrichtung einnimmt.

12. Anbaugerät nach einem der vorhergehenden Ansprüche, wobei eine Tragrahmen-Höheneinstellvorrichtung (21) zum automatischen Verstellen der Tragrahmenhöhe des Tragrahmens (2) beim Verbringen des Arbeitsaggregats (4) von dessen Arbeitsstellung in dessen Transportstellung oder umgekehrt von dessen Transportstellung in dessen Arbeitsstellung, wobei die Höhenverstellvorrichtung (21) dazu ausgebildet ist, den Tragrahmen (2) beim Verbringen des Arbeitsaggregats (4) in die Transportstellung so weit abzusenken, dass eine zulässige Straßentransporthöhe eingehalten ist, und beim Verbringen des Arbeitsaggregats (4) in dessen Arbeitsstellung den Tragrahmen (2) automatisch in einen Soll-Höhenbereich für die Arbeitsstellung zu verfahren.

13. Anbaugerät nach einem der vorhergehenden Ansprüche, wobei das Anbaugerät ein Bodenbearbeitungsgerät, insbesondere ein Pflug, ein Grubber, eine Egge, eine Saatbeetkombination, eine Sämaschine und/oder eine Grünlandmaschine, insbesondere eine Mähmaschine, eine Heuwerbungsmaschine, ein Konditionierer, ein Häcksler und/oder ein sonstiges land- und/oder forstwirtschaftliches Anbaugerät ist.

14. Land- und/oder forstwirtschaftliche Maschine, insbesondere Schlepper (3), mit wenigstens einem Anbaugerät (1), welches gemäß einem der vorhergehenden Ansprüche ausgebildet ist.

## Claims

1. An attachment for attaching to a hauler (3) having a height adjustable support frame (2) at which at least one work assembly (4) such as a mower, a rotary rake, a soil cultivation device, or the like is adjustably suspended between a lowered working position and a raised transport position suspended by means of at least one support arm (5) that is pivotably supported about a horizontal support arm pivot axis (7) at a height adjustable support frame (2), wherein at least one detection means (9) for detecting the height position of the support frame (2) and a display terminal (16) for displaying the detected height position of the support frame (2) are provided, with said display terminal (16) being positionable at the driver's cabin of the hauler (3) in the field of view of the machine operator, **characterized in that** the display terminal (16) has a range display (17, 18) for displaying a desired range of the support frame height and an actual display (19) for displaying the detected actual height position of the support frame (2) relative to said desired range, with the display terminal (16) having a first range display (17) for displaying a desired range of the support frame height for the work position of the attachment (1) in which the support arm (5) is downwardly pivoted and a second range display (18) for displaying a desired range of the support frame height for the work position of the attachment (1) in which the support arm (5) is upwardly pivoted.

2. An attachment in accordance with the preceding claim, wherein the display terminal (16) has a hauler display fixedly provided at the hauler (3) and/or a unit display associated with the attachment (1).

3. An attachment in accordance with one of the preceding claims, wherein the at least one detection means (9) comprises at least one sensor (10, 11, 21, 22) for detecting a position and/or alignment and/or a covered distance and/or a covered pivot angle of a height relevant structural component of the attachment.

4. An attachment in accordance with one of the preceding claims, wherein at least one angle sensor (11) for detecting the pivot position of the support arm (7) is provided, wherein the display terminal (16) has a pivot position desired range display for displaying a desired range for the pivot position of the support arm, and/or wherein an evaluation device for evaluating the detected pivot position and for determining the height position of the support frame (2) from the detected pivot position is provided.

5. An attachment in accordance with one of the preceding claims, wherein the at least one detection means (9) has a height sensor (10) for detecting the distance of a central base frame (6) of the support frame (2) from the ground.

6. An attachment in accordance with one of the preceding claims, wherein the at least one detection means (9) has at least one sensor (21, 22), in particular a linear sensor, for detecting the position and/or the covered distance of a servo control cylinder that is provided for the adjustment of the work assembly (4) and/or the support frame (2).

7. An attachment in accordance with one of the preceding claims, wherein the at least one detection means has at least one distance measurement sensor (23) for detecting the covered distance and/or the position of a height relevant structural part of the attachment.

8. An attachment in accordance with one of the preceding claims, wherein a control device (14) for controlling a height adjustment device for setting the height of the support frame (2) is provided, with the control device (14) having a control module (20) for the semiautomatic or fully automatic setting of the support frame height in dependence on the detected support frame height.

9. An attachment in accordance with the preceding claim in conjunction with claim 5, wherein the control device is configured to adjust the height setting device in dependence on the detected pivot position of the support arm (5) such that the detected pivot position of the support arm (5) reaches a desired range.

10. An attachment in accordance with one of the preceding claims, wherein the control device (14) is configured to adjust the support frame height (2) during or after the traveling of the work assembly (4) into the transport position such that a maximum permitted transport height is observed or fallen below.

11. An attachment in accordance with one of the preceding claims, wherein the work assembly (4) adopts a substantially horizontal alignment in its working position and a substantially upright alignment in its transport position.

12. An attachment in accordance with one of the preceding claims, wherein a support frame height adjustment device (21) for the automatic adjustment of the support frame height of the support frame (2) on the moving of the work assembly (4) from its work position into its transport position or vice versa from its transport position into its work position is provided, with the height adjustment device (21) being configured to lower the support frame (2) on the moving of the work assembly (4) into the transport position so far that a permitted road transport height is observed and, on the moving of the work assembly (4) into its work position to automatically move the support frame (2) into a desired height range for the work position.

13. An attachment in accordance with one of the preceding claims, wherein the attachment is a soil cultivation device, in particular a plow, a grubber, a harrow, a seedbed combination, a seeder, and/or a grassland machine, in particular a mowing machine, a hay-making machine, a conditioner, a chaff cutter, and/or any other agricultural and/or forestry attachment.

14. An agricultural and/or forestry machine, in particular a hauler (3), having at least one attachment (1) that is configured in accordance with one of the preceding claims.

## Revendications

1. Outil destiné à être attelé à un tracteur (3), comprenant un châssis (2) réglable en hauteur, sur lequel au moins un organe de travail (4) tel qu'un mécanisme de coupe, une toupie de ratissage, une unité de travail du sol ou similaire, est suspendu de manière réglable entre une position de travail abaissée et une position de transport relevée au moyen d'au moins un bras porteur (5), qui est monté sur le châssis (2) réglable en hauteur de manière pivotante sur un axe horizontal de pivotement de bras porteur (7), au moins un moyen de détection (9) destiné à détecter la position en hauteur du châssis (2) ainsi qu'un terminal d'affichage (16) destiné à afficher la position en hauteur détectée du châssis (2) étant prévus, ledit terminal d'affichage (16) pouvant être positionné au niveau du poste de conduite du tracteur (3) dans le champ visuel du conducteur de la machine, **caractérisé en ce que** le terminal d'affichage (16) comporte un affichage de plage (17, 18) destiné à afficher une plage de consigne pour la hauteur du châssis et un affichage de valeur réelle (19) destiné à afficher la position en hauteur réelle détectée du châssis (2) par rapport à ladite plage de consigne, le terminal d'affichage (16) comportant un premier affichage de plage (17) destiné à afficher une plage de consigne pour la hauteur du châssis pour la position de travail de l'outil (1), dans laquelle le bras porteur (5) est pivoté vers le bas, et un second affichage de plage (18) destiné à afficher une plage de consigne pour la hauteur du châssis pour la position de transport de l'outil (1), dans laquelle le bras porteur (5) est pivoté vers le haut.

2. Outil selon la revendication précédente, dans lequel le terminal d'affichage (16) comporte un écran d'affichage de tracteur prévu fixe sur le tracteur (3) et/ou un écran d'affichage d'outil propre à l'outil (1).

3. Outil selon l'une des revendications précédentes, dans lequel l'au moins un moyen de détection (9) comprend au moins un capteur (10, 11, 21, 22) pour détecter une position et/ou une orientation et/ou une distance parcourue et/ou un angle de pivotement parcouru d'un composant de structure de l'outil en rapport avec la hauteur.

4. Outil selon l'une des revendications précédentes, dans lequel au moins un capteur angulaire (11) destiné à détecter la position de pivotement du bras porteur (7) est prévu, le terminal d'affichage (16) comportant un affichage de plage de consigne de position de pivotement destiné à afficher une plage de consigne pour la position de pivotement du bras porteur et/ou un dispositif d'évaluation étant prévu pour évaluer la position de pivotement détectée et déterminer la position en hauteur du bras porteur (2) à partir de la position de pivotement détectée.

5. Outil selon l'une des revendications précédentes, dans lequel l'au moins un moyen de détection (9) comporte un capteur de hauteur (10) destiné à détecter la distance entre un support de base (6) central du châssis (2) et le sol.

6. Outil selon l'une des revendications précédentes, dans lequel l'au moins un moyen de détection (9) comporte au moins un capteur (21, 22), en particulier un capteur linéaire, destiné à détecter la position et/ou la distance parcourue d'un cylindre de commande, qui est prévu pour le réglage de l'organe de travail (4) et/ou du châssis (2).

7. Outil selon l'une des revendications précédentes, dans lequel l'au moins un moyen de détection comporte au moins un cylindre de mesure de distance (23) destiné à détecter la distance parcourue et/ou la position d'un élément structural de l'outil en rapport avec la hauteur.

8. Outil selon l'une des revendications précédentes, dans lequel un dispositif de commande (14) destiné à commander un dispositif de réglage en hauteur pour le réglage de la hauteur du châssis (2) est prévu, le dispositif de commande (14) comportant un élément de commande (20) pour le réglage semi-automatique ou entièrement automatique de la hauteur du châssis en fonction de la hauteur de châssis détectée.

9. Outil selon la revendication précédente en liaison avec la revendication 5, dans lequel le dispositif de commande est conçu pour régler le dispositif de réglage de la hauteur en fonction de la position de pivotement détectée du bras porteur (5) de telle manière que la position de pivotement détectée du bras porteur (5) atteint une plage de consigne.

10. Outil selon l'une des revendications précédentes, dans lequel le dispositif de commande (14) est conçu pour, pendant ou après le déplacement de l'organe de travail (4) dans la position de transport, régler la hauteur de châssis (2) de telle manière qu'une hauteur de transport maximale autorisée est respectée ou n'est pas dépassée.

11. Outil selon l'une des revendications précédentes, dans lequel l'organe de travail (4) prend, dans sa position de travail, une orientation sensiblement horizontale et, dans sa position de transport, une orientation sensiblement verticale.

12. Outil selon l'une des revendications précédentes, dans lequel un dispositif de réglage en hauteur (21) de châssis destiné au réglage automatique de la hauteur de châssis du châssis (2) lors du passage de l'organe de travail (4) de sa position de travail à sa position de transport ou inversement de sa position de transport à sa position de travail est prévu, le dispositif de réglage en hauteur (21) étant conçu pour, lors du passage de l'organe de travail (4) dans la position de transport, abaisser le châssis (2) à un tel niveau qu'une hauteur de transport sur route autorisée est respectée, et, lors du passage de l'organe de travail (4) dans sa position de travail, déplacer le châssis (2) automatiquement dans une plage de hauteur de consigne pour la position de travail.

13. Outil selon l'une des revendications précédentes, dans lequel l'outil est un outil de travail du sol, en particulier une charrue, un cultivateur, une herse, un combiné de préparation du sol, un semoir et/ou une machine fourragère, en particulier une faucheuse, une faneuse, une conditionneuse, une ensileuse et/ou un autre outil agricole et/ou forestier.

14. Machine agricole et/ou forestière, en particulier tracteur (3), comprenant au moins un outil (1), qui est conçu selon l'une des revendications précédentes.
